# EUROPEAN PATENT APPLICATION

(11) **EP 2 527 514 A1**
(43) Date of publication of application: **28.11.2012**
(21) Application number: 12005386.3
(22) Date of filing: 28.04.2008
(51) Int. Cl.: D06F 39/04, D06F 31/00, C09K 8/508, C09K 8/60

(54) **Washing system**

(30) Priority: 20.09.2007 EP 07116870
(62) Divisional of application: 08749774.9
(71) Applicant: Wientjens Technology B.V., 6596 DH Milsbeek (NL)
(72) Inventor: Wientjens, Gerry, 6596 MK Milsbeek (NL)
(74) Representative: Gesthuysen, von Rohr & Eggert

(57) **Abstract**

A washing system provided with washing containers (4W-6W; 403A-E) for washing laundry with water and provided with a heater device (305; 405) for heating water in the washing containers (4W-6W; 403A-E), wherein at least two washing containers (4W-6W; 403A-E) each are provided with a water outlet (304a-306a; 403a-e) and a water inlet (304b-306b; 403f-j). The heater device (305; 405) comprises a helical-tube heat exchange portion (352; 452) and a gas burning device (356; 456) for heating the helical-tube heat exchange portion (352; 452), a piping provided with a valve system (304e,f 306e,f; 404a-j) is provided for selectively connecting the helical-tube heat exchange portion (352; 452) to the water outlet (304a-306a; 403a-e) and the water inlet (304b-306b; 403f-j) of at least one washing container (4W-6W; 403A-E), the helical-tube heat exchange portion (352; 452) is provided with a water filter (313; 413) at its water entrance side, and a pump unit (311; 411) is provided for pumping water through the helical-tube heat exchange portion (352; 452).

## Description

The invention relates to a washing system provided with washing containers for washing laundry and provided with a heater device for heating water in the washing containers as described in the generic part of claim 1.

Energy costs are becoming increasingly important factors in laundries and laundry processes. Due to the growing energy-consciousness reduction of energy consumption in laundry processes has a high priority. Laundry systems are industrial systems comprising washing systems for washing dirty sheets, tablecloths and other linen, from e.g. hotels and hospitals as well as dirty clothing and other textiles. Laundry systems further comprise moisture extracting units, such as ironers, dryers or irons, for extracting moisture from the washed lines and textiles.

One of the laundry processes where a substantial part of the total energy consumption within a laundry system takes place is the washing process itself, because the water used in at least a main wash program has to be heated up to a high temperature. In the washing process of e.g. hospital linen a water temperature of about 90 degrees Celsius is required for disinfection reasons.

In known washing systems it is common and standard to reach a required or desired water temperature by injecting hot steam into the washing machine. Due to condensation the steam changes into water becoming part of the washing water, resulting in energy transfer from the steam to the washing water and thus to an increase of the water temperature. However, a drawback of this known heating method is the requirement of an in-house steam boiler and the required piping for supplying the steam to the washing machine. As a rule such a boiler is part of a central energy supply unit of a laundry system, whereby in general the piping is extensive, complicated and has to be maintained and checked regularly. Moreover, such an arrangement of boiler and piping suffers from energy losses.

The prior art forming the starting point of the invention (US-A-3,707,858) discloses a washing system where the water is heated by steam supplied through a pipe. The heated water passes from outside the washing container into a compartment with high water temperature. The water flows from this compartment in a direction opposite to the direction in which laundry is conveyed through the device towards a first washing compartment where it is discharged from the washing container.

Above mentioned prior art washing system is a continuous washing system.

For a stand alone washing machine (GB-A-1,107,345) it is known to use a gas-heated continuous-through flow heat exchanger to heat the water for the washing machine. The heat exchanger is connected to the washing liquid container of this washing machine by conduits. A pump circulates washing liquid through the conduits from the washing liquid container through the heat exchanger and back to the container.

The object of the invention is to provide an energy saving washing system with a number of washing compartments or interconnected washing containers.

The object of the invention is achieved by the washing system as defined in claim 1.

This washing system is provided with washing containers for washing laundry with water and provided with a heater device for heating water in the washing containers, wherein at least two washing containers each are provided with a water outlet and a water inlet, wherein the heater device comprises a helical-tube heat exchange portion and a gas burning device for heating the helical-tube heat exchange portion, wherein a piping provided with a valve system is provided for selectively connecting the helical-tube heat exchange portion to the water outlet and the water inlet of at least one washing container, wherein the helical-tube heat exchange portion is provide with a water filter at its water entrance side, and wherein a pump unit is provided for pumping water through the helical-tube heat exchange portion.

In a practical embodiment the washing containers are parts of washing extractors. More particularly, each washing container may be a part of a washing machine, particularly a tumbler washing machine. A specific advantage of the proposed washing system is that only one heater device is required to heat-up the wash water in several washing machines. This is a considerable simplification with regard to existing washing systems consisting of a number of washing machines. Moreover, the washing system according to the invention is very economical as to energy-consumption.

In a preferred embodiment the valve system is provided for selectively positioning the water filter in at least one of the provided external connections. By this feature, only one filter for filtering or purifying the wash water is required, which further simplifies the arrangement.

In a preferred embodiment of the washing system according to the invention the helical tube portion surrounds an inner space, wherein the gas burning device is such constructed and arranged that a gas flame is directed to the inner space during use. In this way an efficient heating arrangement is achieved.

In a further improved embodiment the gas burning device is provided with a burner tube extending axially in the helical-tube heat exchange portion, the burner tube having a circumferential wall provided with burner openings directed to the inner space. In this way a regular burning area is obtained.

In a practical embodiment the heater device is provided with an enclosure accommodating the helical-tube heat exchange portion and the gas burning device.

In a preferred embodiment the helical-tube heat exchange portion is provided with a heat exchange sub-portion, said portion and sub-portion being arranged in series, wherein the heat exchange sub-portion is accommodated in a combustion gas exhaust portion of the enclosure. In this embodiment an optical use is made of the available combustion energy. By connecting the water outlet of a compartment, of which the wash water is to be heated, to said sub-portion the remainder of the combustion energy present in the exhaust gases is effectively used to preheat the wash water.

In a preferred embodiment a header is provided in the external connection, which header is arranged in parallel with the helical-tube heat exchange portion of the heater device or with the combination of helical-tube heat exchange portion and water filter. In this embodiment it is possible to stop the water circulation from water outlet via heater device to water inlet for a desired time period, e.g. for cleaning the water filter, without switching off the gas burning device to prevent overheating of the heater device.

It is to be noted that GB-A 1 107 345 discloses a domestic washing machine comprising a washing liquid container, a continuous-through-flow heat exchanger communicating with the washing liquid through conduits and heated by a gas burner positioned below the heat exchanger. The heat exchanger is mounted in a recess in a door of the washing machine. No information about the heat exchanger itself is given. An emptying pump is provided for circulating the washing liquid. Upstream of the pump is situated a fluff trap and a clip trap.

The invention also relates to a heater unit specifically designed for use in the washing system according to the invention. The heater unit according to the invention comprises a heater device is provided with a helical-tube heat exchange portion having a water entrance and a water exit, and provided with a gas burning device for heating the helical-tube heat exchange portion, and comprising a water filter arranged in series with the water entrance of the helical-tube heat exchange portion.

The heater unit according to the invention possess the essential features which are needed for a fast and efficient heating and clearing of wash water in modem industrial washing systems. The filter is an essential part of the heater unit in order to prevent any blockage in the helical-tube heat exchange portion by contamination particles or the like in the wash water. Moreover the integrated filter makes filtering somewhere else in the piping unnecessary. The heater unit according to the invention can be applied into new-built washing systems, but can also be used for replacing conventional heaters. Preferably, the water filter is a self-cleaning filter, of a kind as already described in the foregoing.

In a preferred embodiment the helical-tube heat exchange portion surrounds an inner space, wherein the gas burning device is provided with a burner tube extending axially in the helical-tube heat exchange portion, which burner tube has a circumferential wall provided with burner openings directed to the inner space.

In a practical embodiment the heater unit is provided with a frame carrying the heater device and water filter. The frame is preferably a part of a housing accommodating at least the heater device.

In a preferred embodiment the helical-tube heat exchange portion is provided with a helical-tube heat exchange sub-portion, said heat exchange portion and sub-portion being arranged in series, wherein the heat exchange sub-portion is accommodated in a combustion gas exhaust portion of the enclosure. Experimentally it has been proven that this version of the heater unit according to the invention has all the qualities, particularly capacity of energy delivery and speed of heating, for use in any now-a-days large washing system. Of course each heater unit should be tuned to the requirements of its washing system. Moreover, this version is a real high efficient heater unit. In order to get a compact heater unit the heat exchange sub-portion is preferably located above the heat exchange portion.

The effects and advantages of these embodiments of the heater unit have already been discussed in the foregoing.

The invention further relates to an use of the washing system according to the invention.

These and other aspects of the invention are apparent from and will be elucidated with reference to the examples described hereinafter.
- Fig. 1: is a schematic disclosure of a washing system that is not according to the invention.
- Fig. 2: is a schematic disclosure of a preferred embodiment of a gas heater system applied into a washing system according to the invention.
- Fig. 3: is a schematic disclosure of a first embodiment of a washing system according to the invention.
- Fig. 4: is a schematic disclosure of a second embodiment of a washing system according to the invention.

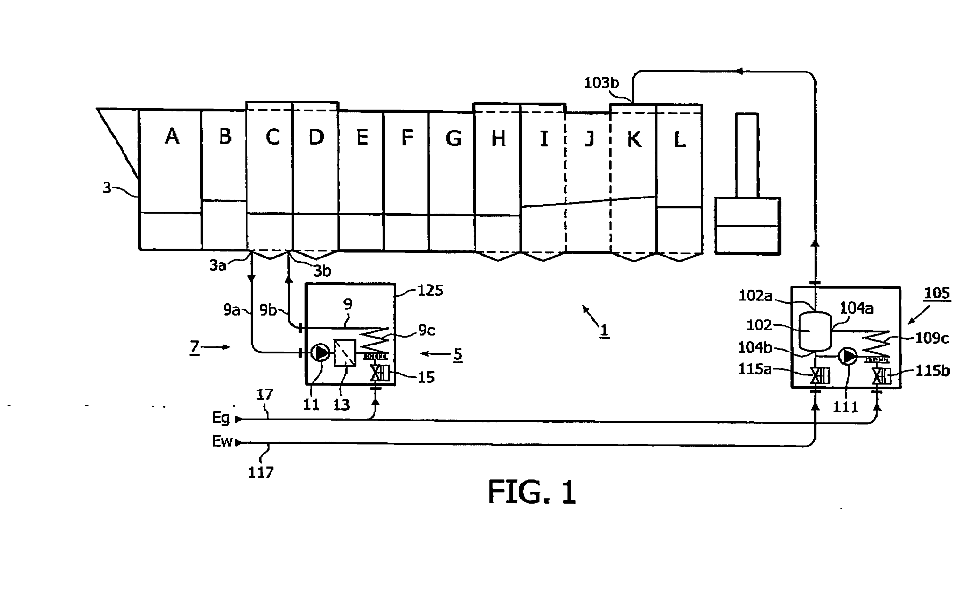

The washing system depicted in Fig. 1 is provided with a washing machine 1 including a washing container 3 for washing laundry and is further provided with a heating device 5 for heating water meant for use in the washing container 1. The washing machine is a so-called continuous bath machine. In the present embodiment the washing container 3 has several chambers or areas, indicated by the letters A to L in Fig. 1. The chambers A and B form a first washing compartment A-B meant for the pre-wash. The chambers C to H form a second washing compartment C-H meant for the main wash cycle. The chambers I to K form a compartment I-K meant for rinsing. The chamber L is meant for neutralization. The washing machine 1 is provided with a conveying device, which may be of a construction known *per se,* e.g. a conveying device comprising an Archimedes'screw, for conveying laundry from the first washing compartment to the second washing compartment and the further compartments. During such conveyance some water is also replaced from a compartment to a next compartment, thus also from the first compartment A-B to the second washing compartment C-H.

The second washing compartment of the washing container 3, particularly the chamber C, is provided with a water outlet 3a and a water inlet 3b, wherein an external connection 7, being a pipe connection, extends between the water outlet 3a and the water inlet 3b. The connection 7 comprises a piping 9 having a drainage pipe portion 9a, a supply pipe portion 9b and a heat exchange pipe portion 9c extending between the pipe portions 9a and 9b. The drainage pipe portion 9a runs from the water outlet 3a, while the supply pipe portion 9b ends at the water inlet 3b. The heating device 5, also called heater device, comprises a gas burning device for heating the heat exchange pipe portion 9c and a heat exchange pipe portion 9c forming together a gas heater system or heater unit. In order to pump water from the water outlet 3a through the gas heater system to the water inlet 3b, a pump unit 11 is mounted in the piping 9. A water filter 13 is provided in the piping 9 in order to filter the water coming from the water outlet 3a. A tube 17 is via a valve unit 15 connected to the gas burning device for letting in gas coming from a gas source Eg.

During use of the above described washing device water having a relatively low temperature, e.g. 30 degrees Celsius, moves from the first washing compartment A-B to the second washing compartment C-H. Because of the fact that in the second washing compartment C-H a considerably higher water temperature, usually between 60 and 90 degrees Celsius, is required the water used in the second washing compartment C-H has to be heated. This heating is obtained in an efficient way by gas heating using the gas heater system as explained above.

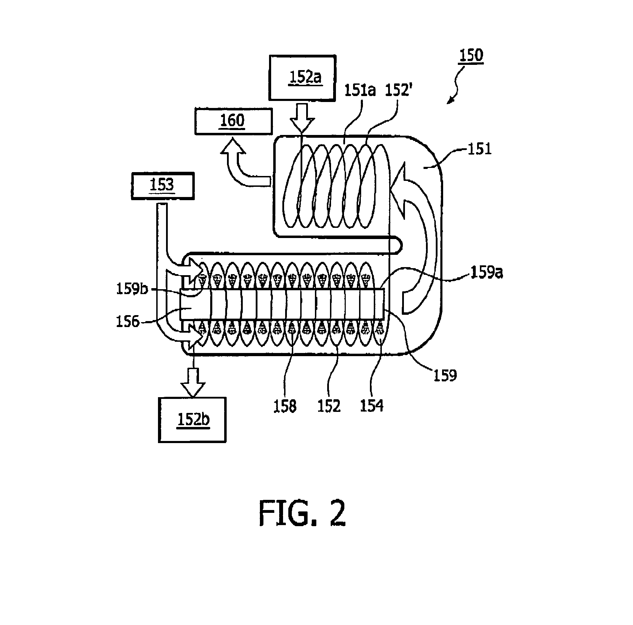

In Fig. 2 a suitable gas heater system is depicted. This heater system, which has the reference numeral 150 and is also mentioned heater unit in this paper, is provided with an enclosure 151 accommodating a heat exchange pipe having one or more portions having the shape of a helical tube. In this embodiment the heat exchange pipe has a helical tube portion 152 and a helical tube sub-portion 152', wherein the portion 152 and the sub-portion 152' are arranged in series and constitute together a helical tube heat exchange pipe. The helical tube portion 152 surrounds an inner space 154. The sub-portion 152' is accommodated in a combustion gas exhaust portion 151a of the enclosure 151 and is positioned above the portion 152. The gas heater system 150 is provided with an air entry 153 and comprises a gas burning device 156 for generating flames 158 in the inner space 154. The gas burning device 156 is provided with a burner tube 159 extending axially in the helical-tube heat exchange portion 152. The burner tube 159 has a circumferential wall portion 159a provided with a plurality of burner openings 159b directed to the inner space 154. The helical tube sub-portion 152' has a cold water manifold 152a, also called water entrance, for connecting to a drainage pipe portion, e.g. similar to the drainage pipe portion 9a connected to the water outlet 3a of the washing system depicted in Fig.1, and a hot water manifold 152b, also called water exit, for connecting to a supply pipe portion, e.g. similar to the supply pipe portion 9b connected to the water inlet 3b of the washing system depicted Fig.1. The gas heater system 150 is also provided with a gas exhaust 160. During use, cold or relatively cold water entering via the water entrance 152a is pre-heated in the helical tube heat exchange sub-portion 152' and subsequently heated to the desired temperature in the helical tube heat exchange portion 152. In this way the available energy is optimally utilized.

With reference to Fig. 1, it is noted that the heater unit 150 is only very schematically depicted in this figure. For the sake of completeness it is informed that the heater unit as shown in the Fig. 1 and 2 comprises the helical-tube heat exchange sub-portion 152' having the water entrance 152a and the helical-tube heat exchange portion 152 having the water exit 152b, comprises the gas burning device 156, and comprises the water filter 13 arranged in series with the water entrance 152a. More generally said, the heater unit 150 includes at least the heater device 5 and water filter 13. The heater unit 150 is provided with a housing 125 accommodating at least the heater device 5 and water filter 13. Preferably the filter 13 is a self-cleaning filter.

With reference to Fig. 1, it is noted that the washing machine 1 may be provided with a further gas heater system for heating water to be used in the rinsing process, thus in the compartment I-K. In the depicted example a gas heater 105, similar to the gas heater 5, and a heat exchange pipe portion 109c, similar to the heat exchange pipe portion 9c, is provided. The gas heater 105 and the heat exchange pipe portion 109c form together a gas heater system. The compartment I-K, particularly the room K, is provided with a water inlet 103b, which is in communication with a water let-out opening 102a of a water boiler 102. The water boiler 102 has two water let-in openings, viz. a first water let-in opening 104a for receiving water heated by the gas heater 105 and a second water let-in opening 104b connected via a valve unit 115a to a tube 117 for receiving water delivered from a water source Ew. The heat exchange pipe portion 109c is connected via a valve unit 115b for receiving gas from the source Eg. A pump unit 111 is mounted in the applied piping for pumping water through the gas heater 105 and to the water inlet 103b.

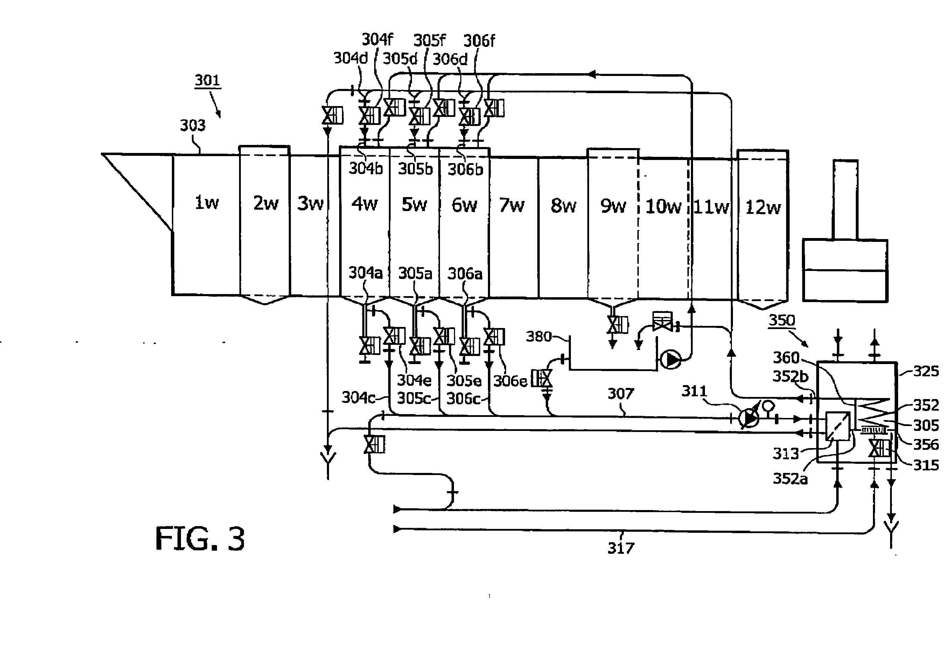

The washing system depicted in Fig. 3 is provided with a washing machine 301 including a washing container 303 for washing laundry and is provided with a heater unit 350 arranged for heating wash water for use in the washing container 303. The washing system is a so-called continuous bath washing system. In the present embodiment the washing container 303 is drum-like and has several compartments, chambers, areas or sub-compartments, indicated by the numerals 1w to 12w in Fig. 3. In this example the chambers 1w and 2w form a first washing compartment serving for the pre-wash. The chambers 3w to 8w form a second washing compartment serving for the main wash cycle. The chambers 9w to 11w form a compartment serving for rinsing. The chamber 12w forms a further compartment serving for neutralization. The washing machine 301 is provided with a conveying device, which may be of a construction known *per se,* e.g. a conveying device comprising an Archimedes'screw, for conveying laundry from the one washing compartment to the other washing compartment. The drum-like washing container 303 may be stationarily arranged or axially swingably and/or rotatably mounted in a chassis.

The second washing compartment of the washing container 303, particularly the chambers 4w, 5w and 6w, are provided with water outlets 304a, 305a and 306a, respectively, and water inlets 304b, 305b and 306b, respectively. The water outlets 304a, 305a and 306a are connected to drainage pipe portions 304c, 305c and 306c, respectively, and the water inlets 304b, 305b and 306b are connected to supply pipe portions 304d, 305d and 306d, respectively. These pipe portions form external connections to the heater unit 350. Some parts of the pipe portions may be common. The washing system is provided with a valve system having a water valve in each pipe portion 304c, 305c, 306c, 304d, 305d and 306d. The valves are indicated by the numerals 304 e, 305e, 306e, 304f, 305f and 306f, respectively.

The heater unit 350 comprises a heating device 305 having a helical-tube heat exchange pipe 352 provided with a water entrance 352a and a water exit 352b, and having a gas burning device 356 for heating the helical-tube heat exchange pipe. The helical-tube heat exchange pipe 352 has a helical-tube heat exchange portion similar to the helical-tube heat exchange portion 152 in the heater unit 150 depicted in Fig. 2 and has a helical-tube heat exchange sub-portion similar to the helical-tube heat exchange sub portion 152' in the heater unit 150 depicted in Fig. 2. The heater unit 350 further comprises a water filter 313, particularly a self-cleaning filter, arranged in series with the water entrance 352a of the helical-tube heat exchange sub-portion. The helical-tube heat exchange portion surrounding an inner space, in a way as disclosed in Fig. 2. The gas burning device 356 is provided with a burner tube which extends axially in the helical-tube heat exchange portion and has a circumferential wall provided with burner openings directed to the inner space, in a way as disclosed in Fig. 2. The heater unit 350 also comprises a housing 325 accommodating the heater device 305. The helical-tube heat exchange sub-portion is arranged in series with the helical-tube heat exchange portion. The heat exchange sub-portion is accommodated in a combustion gas exhaust portion of an enclosure, in a way as disclosed in Fig. 2. In principle, the heater unit 350 is similar to the heater unit 150 applied into the washing system depicted in Fig. 1. The same applies to its working principle.

In order to pump water from the water outlets 304a, 305a and 306a to the heater unit 350, through the heater unit 350 and back to the water inlets 304b, 305b and 306b, a pump unit 311 is mounted in a common piping 307. A gas supply tube 317 is via a gas valve 315 connected to the gas burning device for letting in gas coming from a gas source.

The washing system may be provided with a water tank 380 for storing temporarily wash water, if there is in a certain period no demand for water. Due to this provision the heater unit 350 can continuously heating and reserves of heated water can be created. In order to prevent an interruption of the heating during cleaning of the filter 313 and/or controlling the mentioned water valves the heater unit 350 is provided with a so-called header 360. This header is in principle a pipe arranged between the water entrance 352a and the water exit 352b and connected in parallel with the helical-tube heat exchange pipe 352. During an interruption of the regular water circulation, a circulation via the header takes place. This feature can also be applied successfully into the other shown embodiments.

During a washing process, the wash water of the chambers 4w, 5w and 6w can be heated-up independently from each other by the single heater unit 350, simply by selectively controlling the mentioned valves.

Relevant aspects of the invention not discussed here, can be found in the description relating to the embodiments depicted in the Fig. 1 and 2. It is noted, that the individual chambers 3w to 8w can be or can be regarded as individual second washing compartments.

It is further noted that it is an option to provide the washing system according to the invention with only one kind of compartments, e.g. only the second compartments. Moreover, it is possible to arrange the heater unit such that water for different kinds of compartments is heated.

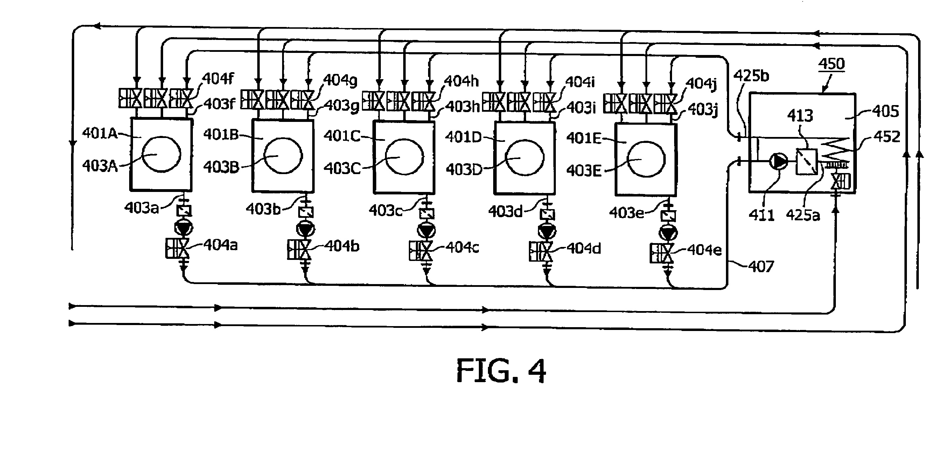

In Fig. 4, another variant of the washing system according to the invention is disclosed. This washing system is provided with several individual washing machines 401A to 401E, particularly washing extractors. Each extractor has a washing container 403A to 403E, respectively, for washing laundry with wash water. The washing system is further provided with a heater unit 450 supported by a frame, not shown in the drawing, and having a heater device 405 for heating the wash water for more than one washing machine, in this example five washing machines 401A to 401E. The containers 403A to 403E of these washing machines are provided with water outlets 403a to 403e, respectively, and water inlets 403f to 403j, respectively, connected to valves 404a to 404j of a valve system. The heater device 405 comprises a helical-tube heat exchange portion having a water exit 425b and a helical-tube heat exchange sub-portion having a water entrance 425a, configured in a similar way as depicted in Fig. 2 and forming together a helical-tube heat exchange pipe 452. The heater device 405 further comprises a gas burning device for heating the helical-tube heat exchange portion and sub-portion. A piping, generally indicated by the numeral 407, being an external connection, provided with the valve system is provided for selectively connecting the water exit 425b of the helical-tube heat exchange portion and the water entrance 425a of the heat exchange sub-portion to the water inlet and the water outlet, respectively, of each washing container 403A to 403E. The helical-tube heat exchange portion is provide with a water filter 413 at its water entrance side. The water filter is supported by the frame supporting the heater unit. A pump unit 411 is provided for pumping water through the helical-tube heat exchange sub-portion and portion.

During a washing process, the wash water of the washing machines 401A to 401E can be heated-up independently from each other by the single heater unit 450, simply by selectively controlling the mentioned valves. Such a controlling can be carried out here, as well as in other embodiments, by applying a suitable control circuit.

Relevant aspects of the invention not discussed here, can be found in the description relating to the embodiments depicted in the Fig. 1 to 3. The heater unit may be identical or at least similar to the already discussed heater units.

While the invention has been illustrated and described in detail in the drawings and foregoing description, illustration and description are to be considered illustrative or exemplary and not restrictive. The invention is not limited to the disclosed embodiments, for example, it is possible to apply several kinds of gas burning devices and heat exchange pipe portions. Other variations to the disclosed embodiments can be understood and effected by the skilled person in practicing the claimed invention, from a study of the drawings, the description and the claims. Particular it is within the scope of the invention to apply the measures taken by the inventor in a washing machine with more or less compartments than applied in the depicted washing machine. In this context it is emphasized that the washing system according to the invention includes both industrial embodiments and domestic embodiments.

It is further noted that the washing system according to the invention and all its components can be made by applying processes and materials known per se.

In the claims and the description the word "comprising" does not exclude other elements, and the indefinite article "a" or "an" does not exclude a plurality. Any reference sign in the Claims should not be construed as limiting the scope.

## Claims

1. A washing system provided with washing containers (4W-6W; 403A-E) for washing laundry with water and provided with a heater device (305; 405) for heating water in the washing containers (4W-6W; 403A-E),
wherein at least two washing containers (4W-6W; 403A-E) each are provided with a water outlet (304a-306a; 403a-e) and a water inlet (304b-306b; 403f-j), **characterized in that**
the heater device (305; 405) comprises a helical-tube heat exchange portion (352; 452) and a gas burning device (356; 456) for heating the helical-tube heat exchange portion (352; 452),
a piping provided with a valve system (304e,f-306e,f; 404a-j) is provided for selectively connecting the helical-tube heat exchange portion (352; 452) to the water outlet (304a-306a; 403a-e) and the water inlet (304b-306b; 403f-j) of at least one washing container (4W-6W; 403A-E),
the helical-tube heat exchange portion (352; 452) is provided with a water filter (313; 413) at its water entrance side, and
a pump unit (311; 411) is provided for pumping water through the helical-tube heat exchange portion (352; 452).

2. A washing system according to claim 1, **characterized in that** the washing containers (403A-E) are part of washing extractors.

3. A washing system according to claim 1 or 2, **characterized in that** the valve system (304e,f-306e,f; 404a-j) is provided for selectively positioning the water filter (313; 413) in at least one of the provided external connections (304c-306c; 304d-306d; 407).

4. A washing system according to any one of the previous claims, **characterized in that**
the helical-tube heat exchange portion (152) surrounds an inner space (154), wherein a gas flame produced by the gas burning device (156) during operation is directed to the inner space (154),
wherein, preferably, the gas burning device (156) is provided with a burner tube (159) extending axially in the helical-tube heat exchange portion (152), which burner tube (159) has a circumferential wall (159a) provided with burner openings (159b) directed to the inner space (154).

5. A washing system according to any one of the previous claims, characterrized in that
the heater device (5) is provided with an enclosure (151) accommodating the helical-tube heat exchange portion (152) and the gas burning device (156), wherein, preferably, the helical-tube heat exchange portion (152) is provided with a heat exchange sub-portion (152'), said portion (152) and sub-portion (152') being arranged in series, and the heat exchange sub-portion (152') is accommodated in a combustion gas exhaust portion (151a) of the enclosure (151).

6. A washing system as claimed in any one of the previous claims, **characterized in that**,
a header (360) is provided in the external connection (304c-306c; 304d-306d) and this header (360) is arranged in parallel with the helical-tube heat exchange portion **(152)** of the heater device (305) or with the combination of helical-rube heat exchange portion (**152**) and water filter (313).

7. A heater unit suitable for use in a washing system according to any one of the previous claims, comprising a heater device (5),
**characterized in that**
the heater device (5) comprises a helical-tube heat exchange portion (152) having a water entrance (152a) and a water exit (152b), a gas burning device (156) for heating the helical-tube heat exchange portion (152), and a water filter (13), preferably a self-cleaning filter arranged in series with the water entrance (152a) of the helical-tube heat exchange portion (152).

8. A heater unit as claimed in claim 7, **characterized in that** the helical-tube heat exchange portion (152) surrounds an inner space (154),
the gas burning device (156) is provided with a burner tube (159) extending axially in the helical-tube heat exchange portion (152), and the burner tube (159) has a circumferential wall (159a) provided with burner openings (159b) directed to the inner space (154).

9. A heater unit as claimed in claim 7 or 8, **characterized in that** it comprises a frame (125) supporting the heater device (5) and the water filter (13).

10. A heater unit as claimed in any one of the claims 7 to 9, **characterized in that** the helical-tube heat exchange portion (152) is provided with a helical-tube heat exchange sub-portion (152'), said heat exchange portion (152) and sub-portion (152') being arranged in series, wherein the heat exchange sub-portion (152') is accommodated in a combustion gas exhaust portion of the enclosure (151).

11. Use of a washing system as claimed in any one of the claims 1 to 6.
